## Europäisches Patentamt
## European Patent Office
## Office européen des brevets

(19)

(11) Numéro de publication: **0 113 305**
**A1**

(12)

# DEMANDE DE BREVET EUROPEEN

(21) Numéro de dépôt: 83450001.9

(22) Date de dépôt: 04.01.83

(51) Int. Cl.³: **G 01 B 5/00**
**B 23 Q 1/16, B 23 Q 1/26**

(43) Date de publication de la demande:
11.07.84 Bulletin 84/28

(84) Etats contractants désignés:
CH DE FR GB IT LI SE

(71) Demandeur: GAME INGENIERIE Société Anonyme
22 boulevard Saint Martin
F-33600 Pessac(FR)

(72) Inventeur: Chevrier, René
13, Les Prés de l'Eglise
Pompignac F-33370 Tresses(FR)

(74) Mandataire: Thébault, Jean-Louis
Cabinet Jean-Louis Thébault 50, Cours de Verdun
F-33000 Bordeaux(FR)

(54) Plateau tournant de métrologie.

(57) L'invention concerne un plateau tournant pour banc de métrologie comprenant un plateau porte-pièces (1) en forme de disque et des moyens de support et d'entraînement en rotation du disque (1), ledit plateau tournant étant caractérisé en ce que ledit plateau porte-pièces (1) est constitué d'un bloc de granit, en ce que lesdits moyens de support du disque sont constitués par une série de dispositifs (4) générant des coussins d'air individuels disposés sous le disque (1), par des moyens de commande (27) sélective des dispositifs à coussin d'air (4) et par des moyens (3) de support du disque au repos et en ce que lesdits moyens d'entraînement en rotation sont constitués par un pivot central assurant la rotation du disque sans jeu radial mais présentant un jeu axial.
- Application à la métrologie.

EP 0 113 305 A1

./...

FIG.1.

- 1 -

## PLATEAU TOURNANT DE MÉTROLOGIE

La présente invention a trait à un plateau tournant porte-pièces destiné à la métrologie et au contrôle dimensionnel.

Le but de l'invention est de proposer un plateau présentant une meilleure stabilité dimensionnelle et géométrique que les plateaux de type connu et comportant des moyens pour assurer sa rotation avec une précision de positionnement angulaire sensiblement supérieure à celle offerte par les plateaux tournants actuels.

A cet effet, l'invention a pour objet un plateau tournant notamment pour banc de métrologie, du type comprenant un plateau proprement dit porte-pièces en forme de disque à faces parallèles, des moyens de support et d'entraînement en rotation du disque autour de son axe en maintenant ce dernier vertical et des moyens de contrôle et de mesure de la position angulaire du disque, ledit plateau tournant étant caractérisé en ce que ledit plateau porte-pièces est constitué d'un bloc de granit dont au moins la face inférieure est usinée de manière à avoir une planéité optimale, en ce que lesdits moyens de support du disque sont constitués par une série de dispositifs montés sur un bâti fixe et générant des coussins d'air individuels disposés sous le disque et capables de supporter le poids du disque et des pièces et de soulever le disque en le maintenant à l'horizontale, par des moyens de commande sélective des dispositifs à coussin d'air et par des moyens de support du disque au repos lorsque ce dernier n'est pas soulevé par lesdits dispositifs à coussin d'air, en ce que lesdits moyens d'entraînement en rotation sont constitués par un pivot central assurant la rotation du disque sans jeu radial mais présentant un jeu axial permettant le déplacement axial du disque et en ce qu'il comporte des moyens de contrôle de la hauteur de soulèvement du disque et de son positionnement angulaire.

Un tel dispositif présente un certain nombre d'avantages substantiels vis-à-vis des plateaux tournants connus, tout particulièrement pour ce qui concerne la stabilité et la précision de mesure. C'est ainsi que l'utilisation d'un plateau porte-pièces constitué d'un ensemble monolithique en granit assure une meilleure stabilité dimensionnelle et géométrique par rapport aux plateaux en fonte ou en acier.

Cette excellente stabilité combinée à la très grande précision de positionnement angulaire du plateau, atteinte grâce au système de support par film d'air et d'entraînement en rotation du plateau sur son coussin d'air, confère à l'ensemble des performances métrologiques remarquables.

Suivant un mode de réalisation les dispositifs à coussin d'air sont constitués par une série de patins pneumostatiques de conception connue régulièrement répartis en couronne sous le disque plateau, alimentés en air sous pression à partir d'une conduite en forme de tore reliée à chaque patin par une liaison à commande de variation de débit indépendante.

Les moyens de support du disque plateau au repos sont par exemple constitués par des pieds fixes solidaires du bâti et disposés sous le disque en étant angulairement régulièrement répartis. Ces pieds fixes comportent des patins réglables en hauteur en vue d'aligner la face de contact desdits pieds dans un plan horizontal qui sera considéré comme le niveau de référence du disque au dessus duquel il sera soulevé grâce auxdits coussins d'air d'une distance préfixée appelée "hauteur de vol".

Quant au pivot central d'entraînement en rotation du disque plateau, il est par exemple constitué par une membrane métallique mince en forme générale de rondelle annulaire coaxiale au disque, dont la périphérie externe est solidarisée du disque et dont la périphérie interne est solidarisée de l'axe moteur du système d'entraînement en rotation.

Ce dispositif, du fait de la très grande rigidité de la membrane vis-à-vis d'efforts radiaux, assure l'entraînement sans jeu angulaire du disque mais permet, grâce à la relative souplesse axiale de la membrane, la levée du disque
due aux patins à air sans nuire à l'entraînement et à la précision de positionnement angulaire.

D'autres caractéristiques et avantages relatifs
aux moyens définis ci-dessus mais aussi aux moyens de commande,
mesure et contrôle associés, ressortiront de la description
qui va suivre d'un mode de réalisation d'un plateau tournant
conforme à l'invention, description donnée à titre d'exemple
uniquement et en regard des dessins annexés sur lesquels :

- Figure 1 représente une vue en perspective avec arraché
  partiel d'un plateau tournant selon l'invention ;
- Figure 2 représente une vue de dessus avec arraché partiel du dispositif de la Figure 1 ;
- Figure 3A représente une demi-vue en coupe verticale suivant la ligne A-O du dispositif de la Figure 2, et
- Figure 3B représente une demi-vue en coupe verticale suivant la ligne OB du dispositif de la Figure 2.

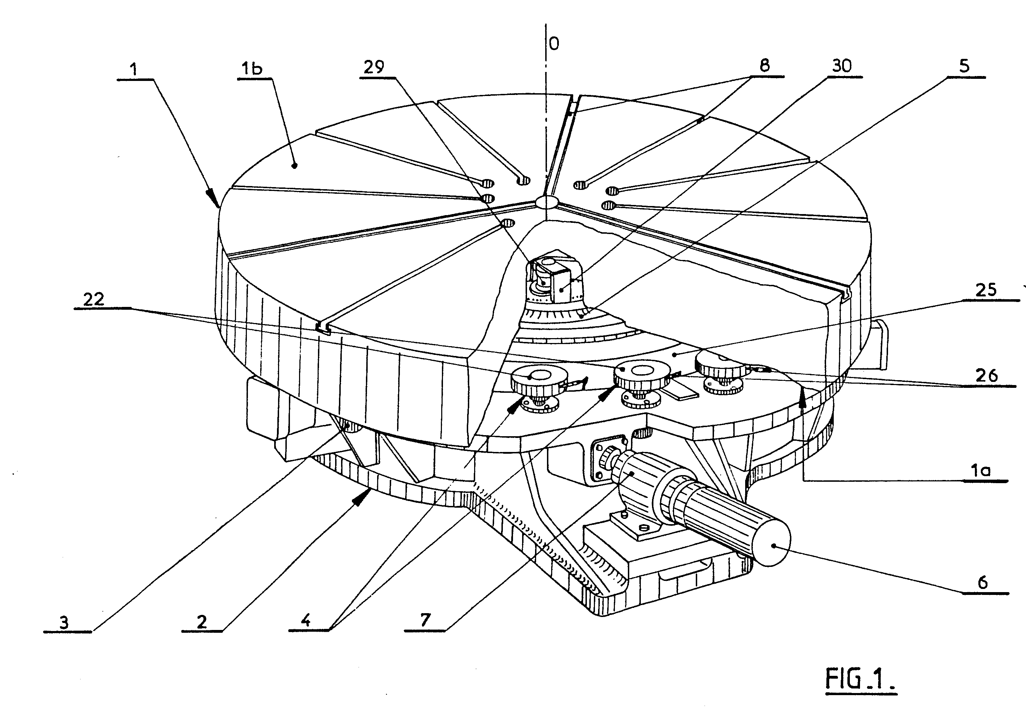

La Figure 1 représente une vue générale d'un plateau tournant conforme à l'invention. Celui-ci est constitué
d'un disque monolithique 1 en granit d'axe vertical O, porté
par un bâti 2 destiné lui-même à être fixé sur un banc de métrologie non représenté.

Deux types de moyens de support du disque 1 sont
prévus selon que ce dernier est au repos ou opérationnel.

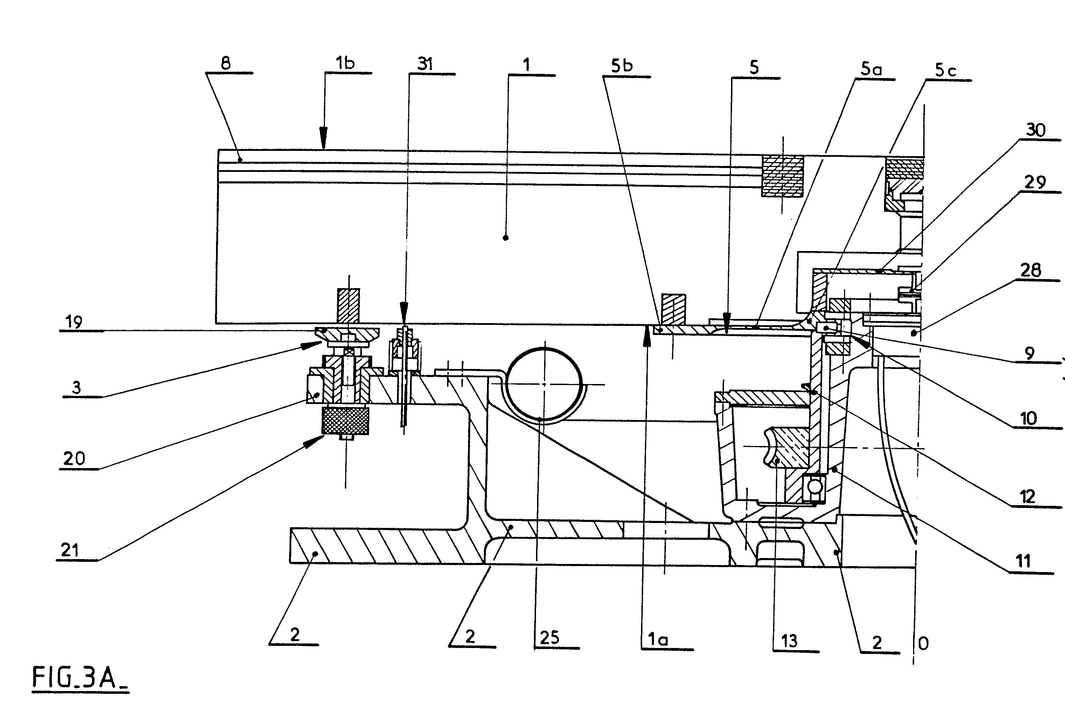

Au repos le disque 1 est immobile et est en appui
sur les trois pieds verticaux 3 (Figure 3A) solidaires du bâti
2 et dont la faxe d'appui est en contact avec la face inférieure 1a du disque 1.

En position opérationnelle, c'est-à-dire apte au
déplacement en rotation autour de l'axe vertical O, du disque
1, ce dernier est très légèrement soulevé du plan d'appui sur
les pieds 3 à l'aide de coussins d'air, sur lesquels il repose
alors, générés par une série de patins pneumostatiques 4 disposés sous le disque 1 et montés sur le bâti 2.

Le disque 1 est entraîné en rotation autour de son
axe O par une membrane 5 en forme de rondelle annulaire, solidaire, d'une part, du disque 1 et, d'autre part, d'un axe
moteur vertical lui-même entraîné à partir d'un moteur électrique 6 et d'un réducteur 7, montés tous les deux sur le
bâti 2.

0113305

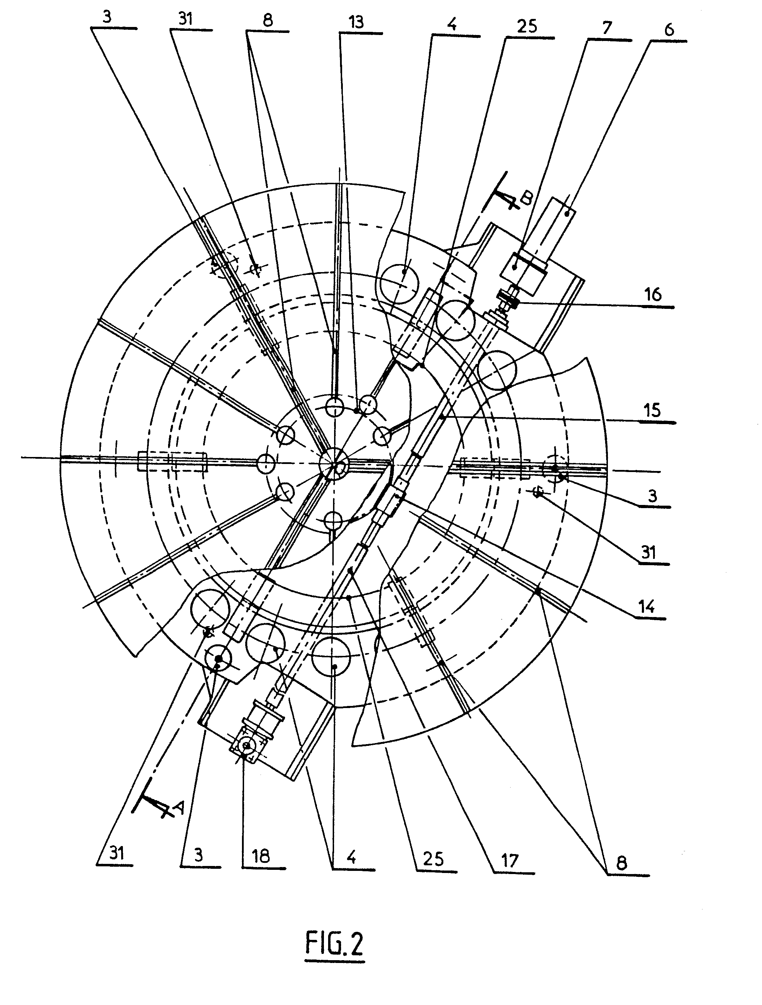

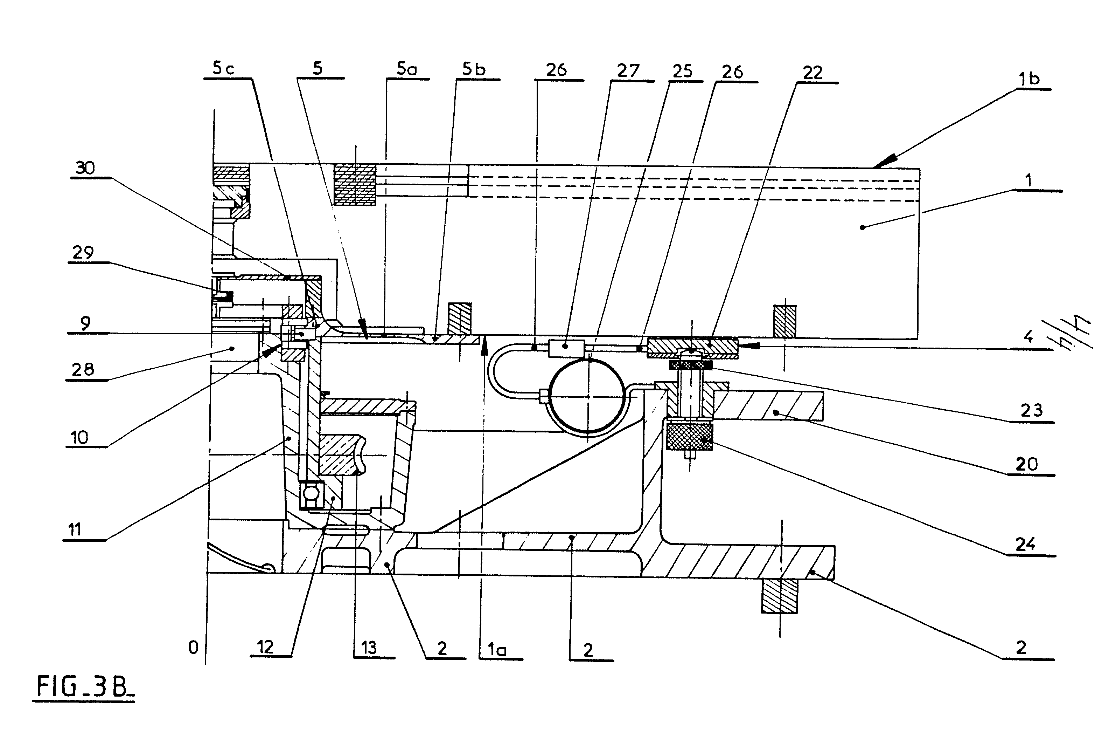

On va décrire maintenant plus en détail le dispositif représenté en se reportant en particulier aux autres figures 2, 3A et 3B.

Le disque de granit 1 présente deux faces parallèles, et, à titre d'exemple, les dimensions suivantes : 250 mm d'épaisseur pour un diamètre de 2.000 mm et une masse de 2.200 Kg.

Le disque 1 présente sur sa face supérieure 1b des rainures 8 des types habituellement rencontrés sur ce genre de plateau et qu'il n'est pas nécessaire de décrire plus en détail, ces rainures servant à la fixation des pièces.

Les deux faces parallèles 1a, 1b sont de préférence usinées de façon à avoir la meilleure planéité possible, par exemple de quelques microns.

Sur la face inférieure 1a du disque 1 est fixée la membrane 5 en forme de rondelle annulaire dont le plan général est sensiblement parallèle au plan de la surface 1a. La membrane 5 comprend une zone centrale annulaire 5a d'épaisseur réduite, une zone périphérique extérieure 5b d'épaisseur renforcée, au droit de la fixation rigide, par tous moyens appropriés, sur le disque 1 et une zone périphérique intérieure 5c d'épaisseur également renforcée et fixée sur la bague extérieure 9 d'un roulement spécial 10 à deux couches d'aiguilles radiales et une couche d'aiguilles axiales, toutes en précontraintes, c'est-à-dire fonctionnant sans jeu. Le roulement 10 est placé dans le même plan horizontal que la membrane 5 de manière que les efforts radiaux éventuels sur le plateau 1 n'entraînent aucun couple de déversement ni sur la membrane 5 ni sur le roulement 10.

La cage intérieure du roulement 10 est solidaire d'un manchon fixe 11 coaxial au disque 1 et boulonné sur le bâti 2.

La bague extérieure 9 du roulement 10 est solidaire d'un manchon 12 lui-même solidaire d'une couronne dentée 13 coaxiale au disque 1 et en prise avec une vis sans fin 14 horizontale (figure 2) agencée de manière à supprimer tout jeu de transmission entre elle et la couronne 13.

A une extrémité la vis 14 est reliée par un arbre 15 et un accouplement à lames flexibles sans jeu 16 à l'arbre de sortie du réducteur 7 dont les engrenages possèdent des ressorts de rattrapage de jeu.

L'autre extrémité de la vis 14 est reliée par un arbre 17 à un système 18 de commande manuelle par manivelle.

Dans le mode de réalisation représenté sur les dessins il est prévu trois pieds fixes 3 de support du disque 1 au repos. Ces trois pieds sont répartis sur un cercle coaxial au disque et angulairement espacés de 120°.

Chaque pied 3 comprend un patin 19 monté sur un rebord circulaire ou collerette 20 du bâti 2. Le patin 19 présente une face d'appui supérieure horizontale en regard du disque et est mobile verticalement par rapport au bâti 2 à l'aide d'un système à double vis 21 montées en différentiel et permettant un réglage précis de la position en hauteur du patin.

En position opérationnelle le disque 1 est soulevé au dessus des pieds 3 à l'aide des vérins pneumostatiques 4. Dans le mode de réalisation représenté ces vérins 4 sont au nombre de dix-huit régulièrement répartis sur un cercle coaxial au disque. Ces patins 4 sont de structure connue. Ils sont avantageusement constitués par les patins dénommés DEXTAIR modèle PD RA 130 fabriqués par la société dite DEXTER CONTINENTAL. Ce type de patin qui peut supporter des charges im-portantes (plusieurs centaines de Kg) comporte un disque plan 22 dont la surface plane supérieure est délimitée au moins partiellement par une paroi en matériau poreux diffusant de l'air sous pression de façon à former un film ou coussin d'air entre la face supérieure du disque 22 et la face inférieure 1a du disque 1.

Les patins 4 sont montés sur la collerette 20. Les disques 22 sont réglables manuellement en position (en hauteur) par rapport à la collerette 20 grâce à un système à vis et écrou 23,24.

Chaque patin 4 est alimenté individuellement en air sous pression à partir d'une conduite torique 25 portée par le bâti 2 et alimentée en air sous pression régulé et filtré à partir d'une source appropriée (non représentée).

A cet effet, chaque disque 22 de patin est relié à la couronne 25 par une canalisation 26 dans laquelle est interposée un régulateur de débit 27.

Le plateau comporte en outre un codeur rotatif 28 de type connu monté directement sur la partie tournante par l'intermédiaire d'un accouplement 29 et d'un étrier 30 solidarisé du manchon 12 en prenant en sandwich la membrane 5.

La hauteur de vol du disque plateau 1, c'est-à-dire la distance entre la face inférieure la et le plan défini par les faces supérieures des disques 22 des patins 4, est contrôlée à l'aide de trois capteurs 31 de type connu montés sur la collerette 20, au droit des pieds fixes 3.

Les différents organes de commande, de mesure et de contrôle du dispositif ci-dessus, c'est-à-dire le moteur électrique 6, la source d'alimentation en air sous pression, les régulateurs de débit 27 de chaque patin, le codeur rotatif 28 et les capteurs de hauteur de vol 31, sont reliés à un système informatique de pilotage assurant la commande, le contrôle et l'asservissement de l'ensemble.

Le fonctionnement du dispositif représenté et décrit ci-dessus est le suivant.

Tout d'abord, on procède au réglage du disque plateau 1. A cet effet, on définit le niveau de référence du plateau 1 à l'aide des trois vérins de nivelage constitués par les pieds 3.

Ce réglage s'effectue à l'aide du système à doubles vis concentriques 21. Les patins 4 seront ensuite mis en contact du plateau 1 avec un couple de serrage donné par un outillage dynamométrique de précision.

La hauteur de vol du plateau est donnée en agissant, sous le contrôle du système informatique, individuellement sur l'alimentation en air de chaque patin 4 par l'intermédiaire des régulateurs de débit 27 ; chaque régulateur 27 permet en effet de régler la raideur correspondante du patin 4 associé afin de maintenir constamment et rigoureusement la face la du plateau à une distance (hauteur de vol) constante de chaque face supérieure des disques 22 et ce quels que soient le poids et l'excentrement de la charge (objet à mesurer) placée sur le plateau 1. A titre d'exemple, pour un plateau 1 de 2.200 Kg, il est possible de supporter une charge de 3.000 Kg avec une hauteur de vol de 10µm à 1µm près, en alimentant les patins 4 sous une pression de 5 bars relatifs, les patins étant du modèle cité plus haut et disposés sur un cercle de rayon égal aux 2/3 de celui du plateau 1.

Une fois le plateau 1 à la hauteur de vol prédéterminée, la mesure tridimensionnelle de l'objet arrimé sur le plateau peut commencer.

L'entraînement en rotation du plateau 1 se fait sans jeu grâce à l'ensemble moto-réducteur à rattrapage de jeu (6,7,16), à la vis sans jeu 14 et à la membrane 5 rigide radialement.

La relative souplesse axiale de cette dernière permet par contre la levée du plateau 1 due aux patins à air 4.

La rotation du plateau sur film d'air assure un coefficient de frottement minimal ce qui permet un accroissement sensible des possibilités de positionnement angulaire précis. La vitesse de déplacement angulaire peut varier par exemple de manière continue entre 0 et 1 tour par minute. Le pilotage des vitesses de rotation du plateau 1 est effectué à partir d'une armoire de commande associée au plateau ou à l'aide du logiciel du banc de métrologie auquel le plateau tournant peut être intégré.

Le codeur rotatif 28, par exemple le modèle ROD 700 fabriqué par la société dite Dr. Johannes HEIDENHAIN GmbH, permet, grâce à son électronique associée, une résolution de 1" d'arc avec une précision, tout confondu, de 10". Ce type de codeur incrémental fournit une information relative, l'électronique assurant la remise à zéro au passage de 360°.

La boucle d'asservissement en position angulaire du plateau 1 (à partir du codeur 28) est, dans le cas d'un banc de métrologie à commande informatisée, directement pilotée par le système informatique, la précision de cet asservissement étant alors celle du codeur.

Bien entendu, on prévoit un dispositif de sécurité n'autorisant la rotation du plateau que si la présence de la pression d'air a été vérifiée et si la hauteur de vol est correcte, celle-ci étant vérifiée en permanence par les capteurs 31 qui effectuent une mesure sans contact. Ce dispositif, en cas par exemple de diminution de pression dans les circuits des patins 4, commandera immédiatement l'arrêt de la rotation du disque.

Le plateau 1 n'est soulevé qu'en période d'utilisation du banc de mesure sur lequel il est installé et en dehors de cette période les patins 4 sont hors service et le plateau 1 repose sur les pieds fixes 3 qui supportent l'essentiel du poids du plateau.

Enfin, l'invention n'est évidemment pas limitée au mode de réalisation représenté et décrit ci-dessus mais en couvre au contraire toutes les variantes notamment en ce qui concerne la structure et l'agencement des moyens pour constituer les coussins d'air individuels de soulèvement du plateau 1 ainsi que ceux des moyens pour assurer l'entraînement en rotation sans jeu radial du plateau 1 tout en permettant un léger mouvement axial du plateau.

REVENDICATIONS
:=:=:=:=:=:=:=:=:=:=:=:=:=:

1. Plateau tournant,notamment pour banc de métrologie, du type comprenant un plateau proprement dit porte-pièces (1) en forme de disque à faces parallèles, des moyens de support et d'entraînement en rotation du disque (1) autour de son axe (O) en maintenant ce dernier vertical et des moyens de contrôle et de mesure de la position angulaire du disque, ledit plateau tournant étant caractérisé en ce que ledit plateau porte-pièces (1) est constitué d'un bloc de granit dont au moins la face inférieure (1a) est usinée de manière à avoir une planéité optimale, en ce que lesdits moyens de support du disque sont constitués par une série de dispositifs (4) montés sur un bâti fixe et générant des coussins d'air individuels disposés sous le disque (1) et capables de supporter le poids du disque et des pièces et de soulever le disque en le maintenant à l'horizontale, par des moyens (27) de commande sélective des dispositifs à coussin d'air (4) et par des moyens (3) de support du disque au repos lorsque ce dernier n'est pas soulevé par lesdits dispositifs à coussin d'air, en ce que lesdits moyens d'entraînement en rotation sont constitués par un pivot central assurant la rotation du disque sans jeu r a d i a l mais présentant un jeu axial permettant le déplacement axial du disque et en ce qu'il comporte des moyens (31) de contrôle de la hauteur de soulèvement du disque et de son positionnement angulaire.

2. Plateau tournant suivant la revendication 1, caractérisé en ce que lesdits dispositifs (4) générateurs de coussins d'air individuels sont constitués par un certain nombre de patins pneumostatiques régulièrement répartis en couronne sous le disque plateau (1) et alimentés en air sous pression régulé chacun par une canalisation individuelle (26) dans laquelle est interposé un régulateur de débit (27).

3. Plateau tournant suivant la revendication 2, caractérisé en ce que les patins pneumostatiques (4) sont montés sur le bâti (2) et réglables en position verticalement de façon à permettre l'alignement au repos dans un même plan horizontal de la face supérieure desdits patins (4).

4. Plateau tournant suivant la revendication 2 ou 3 caractérisé en ce que lesdits patins (4) sont alimentés en air sous pression régulé et filtré à partir d'une conduite torique (25) portée par le bâti (2) et reliée à une source d'air sous pression appropriée.

5. Plateau tournant suivant l'une des revendications 1 à 4, caractérisé en ce que lesdits moyens (3) de support du disque (1) au repos sont constitués par des pieds fixes solidaires du bâti (2) disposés sous le disque (1) en étant angulairement régulièrement répartis, les patins supports (19) des pieds étant réglables verticalement de façon à aligner la face supérieure desdits patins (19) suivant un plan horizontal constituant le niveau de référence du disque plateau (1).

6. Plateau tournant suivant l'une des revendications 1 à 5, caractérisé en ce que ledit pivot central d'entraînement en rotation du disque plateau (1) est constitué par une membrane métallique mince (5) en forme générale de rondelle annulaire plane, coaxiale au disque (1), dont la périphérie externe (5b) est solidarisée du disque (1), et dont la périphérie interne (5c) est solidarisée de l'axe moteur du système d'entraînement en rotation.

7. Plateau tournant suivant la revendication 6, caractérisé en ce que la périphérie interne (5c) de la membrane (5) est solidarisée de la bague extérieure (9) d'un roulement à aiguilles (10) dont la cage intérieure est solidaire du bâti (2), ladite bague extérieure (9) étant située sensiblement dans le plan de ladite membrane (5) et fixée sur un manchon (12) solidaire d'une couronne dentée (13) coaxiale au disque (1) et entraînée en rotation par un système moteur (6,7,16) sans jeu.

8. Plateau tournant suivant la revendication 7, caractérisé en ce qu'il comporte un codeur rotatif (28) interposé entre le support (11) de la cage intérieure dudit roulement (10) et ladite bague extérieure (9) du roulement par l'intermédiaire d'un accouplement sans jeu (29) solidaire de la partie tournante du codeur (28) et d'un étrier (30) solidarisé de la périphérie interne (5c) de ladite membrane (5).

9. Plateau tournant suivant l'une des revendications

- 3 -

**0113305**

1 à 8, caractérisé en ce qu'il comporte des capteurs (31) montés sur le bâti (2) et chargés de mesurer la distance entre la face inférieure (1a) du disque plateau (1) et un plan de référence constitué par la face d'appui desdits moyens (3) de support du disque (1) au repos.

10. Plateau tournant suivant l'une des revendications 1 à 9 caractérisé en ce que les divers organes de commande, de mesure et de contrôle sont reliés à une unité extérieure de traitement informatique pilotant l'ensemble à l'aide d'un logiciel approprié.

FIG.2

FIG.3A

0113305

3/4

0113305

FIG. 3B.

# 0113305

**Numéro de la demande**

## Office européen des brevets

## RAPPORT DE RECHERCHE EUROPEENNE

EP 83 45 0001

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X,Y | GB-A-1 452 280 (THE BRITISH UNITED SHOE MACHINERY CY., LTD.) * Titre; figures 1-3; page 3, ligne 106 - page 4, ligne 65; page 5, lignes 18-31 * | 1,2,4, 10 | G 01 B 5/00 B 23 Q 1/16 B 23 Q 1/26 |
| | --- | | |
| X | FR-A-1 573 361 (CROUNSE CORP.) * Titre; figures 5,5A,6,7; page 15, ligne 28 - page 17, ligne 26 * | 1,2,4, 7,8,10 | |
| | --- | | |
| Y | DE-B-1 148 123 (SCHIESS A.G.) * Figures 1,1A,2; colonne 2, ligne 11 - colonne 6, ligne 42; colonne 4, lignes 26-39 * | 1,2,4, 9 | |
| | --- | | **DOMAINES TECHNIQUES RECHERCHES (Int. Cl. ³)** |
| A | CH-A- 480 920 (GEORG MÜLLER KUGELLAGERFABRIK K.G.) * Figures 1,2; colonne 2, ligne 8 - colonne 3, ligne 14 * | 1,7 | G 01 B G 12 B G 01 D B 23 Q |
| | --- | | |
| A | DE-A-1 752 133 (E. BÜCHE) * Figures 1,2; page 3, paragraphe 3 - page 6, paragraphe 2 * | 1 | |
| | ----- | | |

Le présent rapport de recherche a été établi pour toutes les revendications

| Lieu de la recherche | Date d'achèvement de la recherche | Examinateur |
|---|---|---|
| LA HAYE | 04-09-1983 | VISSER F.P.C. |